# FASCICULE DE BREVET EUROPEEN

(11) **EP 2 201 401 B1**
(45) Date de publication et mention de la délivrance du brevet: **18.12.2013**
(21) Numéro de dépôt: 08804695.8
(22) Date de dépôt: 24.09.2008
(51) Int. Cl.: G01S 19/22, G01S 19/28, G01C 21/00

(54) **PROCEDE ET SYSTEME DE GESTION ET DETECTION DES MULTITRAJETS DANS UN SYSTEME DE NAVIGATION**
VERFAHREN UND SYSTEM ZUR VERWALTUNG UND DETEKTION MEHRERER ROUTEN IN EINEM NAVIGATIONSSYSTEM
METHOD AND SYSTEM FOR MANAGING AND DETECTING MULTIPLE ROUTES IN A NAVIGATION SYSTEM

(30) Priorité: 28.09.2007 FR 0757958
(43) Date de publication de la demande: 30.06.2010
(73) Titulaire: SAGEM Défense Sécurité, 75015 Paris (FR)
(72) Inventeur: VACHER, Charlie, F-75015 Paris (FR); IBANEZ, Guillaume, F-75015 Paris (FR); GOUDON, Jean-Claude, F-75015 Paris (FR)
(74) Mandataire: Regimbeau
(86) Numéro de dépôt international: PCT/EP2008/062792
(87) Numéro de publication internationale: WO 2009/040381

(56) Documents cités:
- EP-A- 1 775 598
- US-A- 5 631 838
- US-B1- 6 377 891

## Description

Le domaine de l'invention est celui des systèmes de navigation pour porteur aéronautique ou terrestre, comprenant un récepteur de positionnement par satellites, par exemple un récepteur GPS.

L'invention concerne plus particulièrement un système de navigation et un procédé de contrôle d'un tel système aptes à assurer l'intégrité de la solution de navigation fournie par un tel système.

Dans le domaine des systèmes de navigation, et en particulier pour les systèmes de navigation utilisant des pseudo-distances fournies par un système de positionnement par satellites, une des difficultés majeures et source régulière d'erreur de positionnement est la gestion et la détection des multitrajets indirects correspondant à une réflexion du signal émis par le satellite avant d'atteindre le récepteur.

En plus de dégrader significativement la position calculée par le récepteur GPS, de tels phénomènes affectent effectivement l'intégrité de la position calculée par le récepteur GPS dans la mesure où ils ne sont pas traités par les mécanismes de vérification d'intégrité classiquement mis en oeuvre.

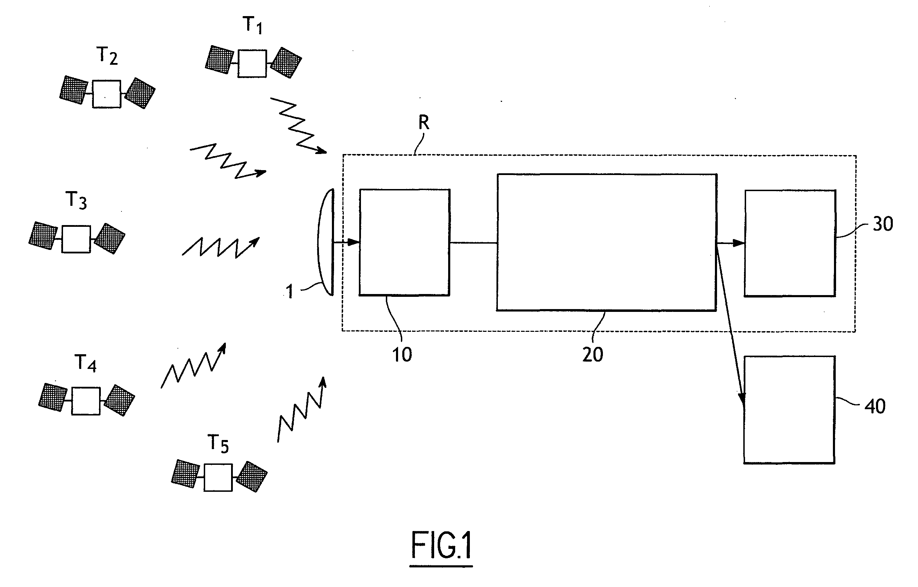

On a représenté sur la figure 1 un schéma de principe de la surveillance autonome d'intégrité de récepteur (ou SAIM pour « Receiver Autonomous Integrity Monitoring ») classiquement mise en oeuvre dans un récepteur GPS.

Le récepteur R dispose d'une antenne 1 apte à recevoir des signaux GPS en provenance d'une pluralité de satellites T₁-T₅.

Le récepteur R comporte des moyens 10 adaptés pour calculer, pour chaque signal GPS en provenance d'un satellite T₁-T₅ poursuivi par le récepteur, un ensemble de mesures brutes de navigation (également dénommées « raw GPS measurements »). Ces mesures brutes de navigation comprennent typiquement les pseudo-distances, les pseudo-vitesses, des indicateurs de performance associés - par exemple l'indicateur UERE (« User Equivalent Range Error ») désignant l'erreur sur la mesure de distance récepteur-satellite - ainsi que l'heure de mesure UTC (« Universal Time Coordinated ») correspondante.

Les ensembles de données brutes de navigation sont envoyées à un module RAIM 20 qui surveille la cohérence globale de la constellation de satellites en utilisant toutes les mesures GPS brutes effectivement fournies par les moyens de calcul 10, et exclut les mesures brutes apparaissant comme non cohérentes.

Les mesures brutes restantes à la fin du processus RAIM sont marquées comme étant « valides ». Ces mesures valides sont alors utilisées pour élaborer la solution de navigation, par un filtre de navigation GPS pur 30, ou encore par un filtre de navigation hybride inertiel/GPS 40. La solution de navigation comprend typiquement les paramètres de navigation PVT : Position/Vitesse/Temps.

On comprend donc que selon la surveillance autonome d'intégrité RAIM, sont prises en considération les mesures brutes calculées pour l'ensemble des satellites poursuivis par le récepteur. On vient ensuite détecter une incohérence de constellation parmi toutes ces mesures brutes, pour le cas échéant exclure les mesures brutes à l'origine de cette incohérence.

Il en découle que les mesures brutes entachées d'erreur, mais qui ne génèrent pas d'incohérence de constellation ne sont pas détectées et/ou exclues par la surveillance RAIM. De telles mesures se voient alors marquées comme étant valides, et utilisées pour l'élaboration de la solution de navigation.

C'est le cas par exemple de mesures brutes correspondant à un multitrajet indirect, dont on a vu précédemment qu'elles affectent pourtant l'intégrité de la solution de navigation.

On connaît des documents EP 1 775 598 (D1) et US 6,377,891 (D2) des techniques conformes au préambule des revendications 1 et 6 selon lesquelles on a recours à des « masques d'élévation » pour sélectionner les satellites dont les mesures seront utilisées dans l'élaboration de la solution de navigation. Les mesures des satellites de plus faibles élévation sont alors purement et simplement ignorées, ce qui se traduit potentiellement par un nombre trop faible de satellites poursuivis pour élaborer une solution de navigation intègre.

Il existe donc un besoin pour améliorer la surveillance d'intégrité, notamment pour limiter l'impact des multitrajets indirects, en évitant d'utiliser dans l'élaboration de la solution de navigation des mesures brutes entachées d'erreur, telles que celles correspondant à un multitrajet indirect (et en particulier celles correspondant à un multitrajet purement indirect pour lequel seul le signal réfléchi, mais pas le signal direct, est reçu par le système de navigation).

L'invention a pour objectif de répondre à ce besoin, et propose à cet effet, selon un premier aspect, un procédé de contrôle d'un système de navigation de porteur conforme à la revendication 1.

Certains aspects préférés, mais non limitatifs, de ce procédé sont les suivants sont définis dans les revendications dépendantes 2-5.

Selon un second aspect, l'invention concerne un système de navigation destinée à être intégré dans un porteur conforme à la revendication 6.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà commentée, est un schéma d'un système de navigation mettant en oeuvre une surveillance autonome d'intégrité RAIM ;
- la figure 2 est un schéma représentant un multitrajet purement indirect pour lequel seul le signal réfléchi, mais pas le signal direct, est reçu par le système de navigation d'un porteur ;
- la figure 3 est un schéma illustrant le principe du contrôle d'élévation selon l'invention ;
- la figure 4 est un diagramme représentant un système de navigation selon un mode de réalisation possible du second aspect de l'invention.

L'invention concerne selon un premier aspect un procédé de contrôle d'un système de navigation d'un porteur (aéronautique ou terrestre), le système comprenant un récepteur apte à recevoir des signaux en provenance d'une pluralité de transmetteurs, et étant également apte à mesurer, pour chaque transmetteur, une pseudo-distance entre le récepteur et ledit transmetteur, et à élaborer une solution de navigation à partir d'une pluralité de pseudo-distances mesurées.

Dans ce qui suit, on prend l'exemple du système GPS de positionnement par satellites. On comprendra toutefois que l'invention n'est pas limitée à ce système particulier, mais a vocation à s'étendre à tout type de système de positionnement par satellites du type GNSS (Global Navigation Satellite System), en particulier au futur système Galileo.

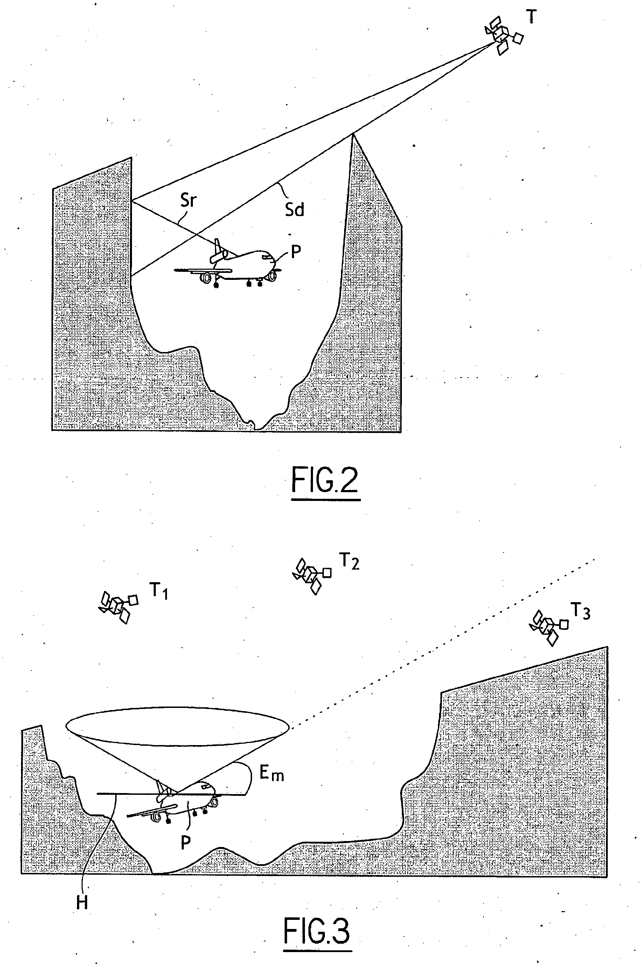

On a représenté sur la figure 2 un cas possible d'occurrence d'un multitrajet purement indirect selon lequel seul le signal réfléchi Sr, mais pas le signal direct Sd, est reçu par le système de navigation d'un porteur P (ici un porteur aéronautique) en provenance d'un transmetteur T. Dans le cas de la figure 2, le multitrajet a pour origine le fait que le transmetteur T ne se trouve pas en une position suffisamment élevée par rapport au porteur P pour que signal direct Sd puisse atteindre le porteur.

La figure 3 illustre le principe du contrôle d'élévation mis en oeuvre dans le cadre de l'invention. Selon l'invention, on contrôle l'élévation de chacun des transmetteurs T₁-T₃ par rapport à l'horizontale H du porteur P, de manière à distinguer les transmetteurs T₁-T₂ présentant une élévation supérieure à une élévation minimale Em des transmetteurs T3 présentant une élévation inférieure à l'élévation minimale Em. On repère ainsi les transmetteurs T₃ qui dans la mesure où ils ne se trouvent pas en une position suffisamment élevée par rapport au porteur P risque d'occasionner des multitrajets.

On retient ensuite pour l'élaboration de la solution de navigation l'ensemble des pseudo-distances pour lesquelles l'élévation du transmetteur correspondant est supérieure à l'élévation minimale Em.

On précise ici qu'on entend par « élévation » l'angle formée entre la ligne porteur-satellite et le plan horizontal passant par le porteur. L'élévation varie ainsi entre 0° et 90° en fonction de la hauteur du satellite dans le ciel (en d'autres termes l'élévation varie de de l'horizon à la position verticale au dessus du porteur).

L'élévation du satellite vu par le porteur peut notamment être calculée en utilisant les informations portant sur les positions respectives du porteur et du satellite. Cet angle d'élévation est ensuite comparé avec un angle d'élévation correspondant à ladite élévation minimale Em et prédéterminé par exemple en fonction du porteur et/ou de la phase de vol.

On précise également ici que l'on entend par « horizontale du porteur » le plan horizontal passant par le porteur (il s'agit du plan perpendiculaire à la verticale passant par le porteur)

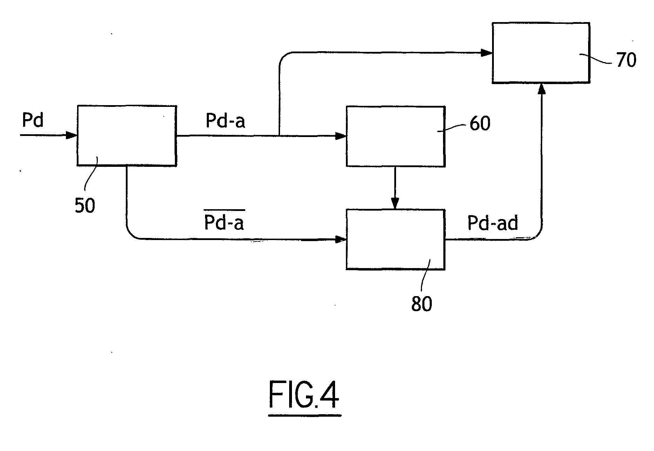

En référence à la figure 4, le système de navigation selon le second aspect de l'invention comporte des moyens de contrôle de l'élévation 50 de chacun des transmetteurs T₁-T₃ par rapport à l'horizontale H du porteur P. Ces moyens 50 permettent ainsi de discriminer parmi l'ensemble des pseudo-distances mesurées Pd, les pseudo-distances Pd-a (également dénommées pseudo-distances autorisées directement) mesurées pour les transmetteurs dont l'élévation est supérieure à l'élévation minimale (les transmetteurs T₁ et T₂ sur la figure 3) des pseudo-distances *̅P̅d̅*̅ -̅ *̅a̅*̅ non autorisées directement qui sont mesurées pour les transmetteurs dont l'élévation est inférieure à l'élévation minimale (le transmetteur T₃ sur la figure 3).

Le système de navigation comporte en outre un filtre 60 dit à élévation minimale, lequel n'utilise pour élaborer une solution de navigation que les pseudo-distances Pd-a autorisées directement pour lesquelles le transmetteur correspondant T₁-T₂ se trouve au-dessus de l'élévation minimale Em par rapport à l'horizontale H du porteur P, et dont on est par conséquent certain qu'elles ne sont pas affectées par des multitrajets indirects.

L'élévation minimale Em à considérer peut bien entendu varier d'un porteur à un autre. On utilisera par exemple une valeur d'élévation minimale Em différente pour un porteur terrestre de celle utilisée pour un porteur aéronautique.

A titre d'exemple purement illustratif, on peut considérer une élévation minimale de 30° pour un avion, si on considère que l'avion ne sera jamais amené à voler dans un canyon présentant un angle d'ouverture vers le ciel inférieur à 120°.

Bien entendu, l'élévation minimale peut évoluer en fonction des applications, et même varier en fonction de l'utilisation du porteur. Ainsi, l'élévation minimale peut être modifiée en fonction d'une phase de navigation du porteur. Considérant un avion à titre d'exemple, on peut par exemple utiliser une valeur d'élévation minimale différente selon que la phase de navigation est une phase de vol basse altitude ou une phase de vol océanique (où d'ailleurs cette fonction pourra même être désactivée, par exemple en considérant une élévation minimale nulle).

Le filtre à élévation minimale 60, prévu pour fournir une solution de navigation à partir des pseudo-distances Pd-a mesurées autorisées directement par le contrôle d'élévation (c'est-à-dire celles correspondant aux transmetteurs présentant une élévation supérieure à l'élévation minimale), peut être un filtre GPS pur (par exemple du type calcul de la position par la méthode de bancroft) ou encore un filtre hybride inertiel/GPS.

Selon l'invention, on réalise une discrimination des multitrajets parmi les pseudo-distances *̅P̅d̅*̅ -̅ *̅a̅*̅ non autorisées directement, mesurées pour les transmetteurs T₃ dont l'élévation est inférieure à l'élévation minimale (Em) et non utilisées par le filtre à élévation minimale 60 pour élaborer une solution de navigation, et on retient en outre pour l'élaboration de la solution de navigation les pseudo-distances Pd-ad autorisées après ladite discrimination.

A cet effet, le système de navigation comporte des moyens de discrimination des multitrajets 80 qui utilise le filtre à élévation minimale 60 pour discriminer, parmi les pseudo-distances *̅P̅d̅*̅ -̅ *̅a̅*̅ mesurées pour les transmetteurs (T₃) dont l'élévation est inférieure à l'élévation minimale et non utilisées par le filtre à élévation minimale 60, celles Pd-ad qui pourront toutefois être utilisées pour élaborer une solution de navigation.

Le système de navigation peut ainsi comporter en outre un filtre dit de navigation 70 apte à fournir les informations de navigation à partir de toutes tes informations de pseudo-distances disponibles. Ce filtre de navigation 70 utilise ainsi au moins toutes les pseudo-distances Pd-a autorisées directement qui sont utilisées par le filtre à élévation minimale 60, ainsi que les pseudo-distances Pd-ad non utilisées par le filtre à élévation minimale 60 mais que les moyens de discrimination de multitrajets 80 auront cependant autorisées.

On retiendra ici que l'utilisation d'un filtre hybride inertiel/GPS pour le filtre à élévation minimale 60 présente l'avantage de pouvoir réaliser la fonction de détection des multitrajets même si le nombre de pseudo-distances Pd-a émises par des satellites au-dessus de l'élévation minimale est faible.

Un tel filtre hybride permet effectivement de continuer à éléborer une solution de navigation même si le nombre de satellites au-dessus de l'élévation minimale devient inférieure à 4 (la position est ainsi encore calculée, contrairement à un filtre GPS pur qui ne fournit plus de position si le nombre de satellites devient inférieur à 4).

Selon une première variante ne faisant pas l'objet de l'invention, on n'autorise dans le filtre de navigation 70 que les pseudo-distances Pd-a autorisées directement et utilisées par le filtre à élévation minimale 60. Cette variante présente l'avantage d'être simple et de fonctionner systématiquement, et dans tous les cas (que le filtre de navigation 70 soit une filtre hybride inertiel/GPS ou un filtre GPS pur). Elle peut toutefois s'avérer pénalisante du point de vue de la performance du filtre de navigation et de sa disponibilité (en particulier pour un filtre de navigation GPS pur).

Selon une seconde variante faisant l'objet de l'invention, on réalise une discrimination des multitrajets parmi les pseudo-distances *̅P̅d̅*̅ -̅ *̅a̅*̅ non autorisées directement, mesurées pour les transmetteurs (T₃ dans l'exemple de la figure 3) dont l'élévation est inférieure à l'élévation minimale, et on retient en outre pour l'élaboration de la solution de navigation les pseudo-distances Pd-ad autorisées après ladite discrimination. Le filtre de navigation 70 utilise ainsi toutes les pseudo-distances autorisées directement Pd-a, ainsi que les pseudo-distances Pd-ad non autorisées directement et non utilisées par le filtre à élévation minimale 60, mais que les moyens de discrimination de multitrajets 80 autorisent cependant.

Les moyens de discrimination 80 peuvent utiliser les informations de position et d'écart-type de position, calculées par le filtre à élévation minimale 60. Plus précisément, les moyens de discrimination 80 calculent, à partir de ces informations de position et d'écart-type de position associées du porteur et calculées par le filtre à élévation minimale 60, la pseudo-distance - et l'écart-type associé - du satellite non autorisé directement, et la comparent à la mesure réelle (pseudo-distance *̅P̅d̅*̅ -̅ *̅a̅*̅ non autorisée directement). Dans l'hypothèse où le résultat de cette comparaison est inférieur à +/- n sigma (n variant en fonction du taux d'erreur accepté), le satellite peut être revalidé (on pourra alors utiliser sa pseudo distance, du type Pd-ad, dans le filtre de navigation 70). Dans le cas contraire, le satellite reste invalidé.

Les moyens de discrimination 80 peuvent également tester la cohérence par un test d'hypothèse (par exemple du type RAIM) du système constitué des pseudo-distances Pd-a autorisées directement et d'une pseudo-distance *̅P̅d̅*̅ -̅ *̅a̅*̅ non autorisée directement à tester de façon récursive (N tests si N pseudo-distances *̅P̅d̅*̅ -̅ *̅a̅*̅ non autorisées directement à tester).

La discrimination des multitrajets peut ainsi consister en un contrôle de la cohérence de chacune des pseudo-distances *̅P̅d̅*̅ -̅ *̅a̅*̅ mesurées pour les transmetteurs (T₃) dont l'élévation est inférieure à l'élévation minimale avec une solution de navigation élaborée, par le filtre à élévation minimale 60, uniquement avec les pseudo-distances Pd-a autorisées directement (mesurées pour les transmetteurs (T₁-T₂) dont l'élévation est supérieure à l'élévation minimale). On précise ici que l'on peut tout aussi bien vérifier la cohérence d'un satellite non autorisé directement en comparant d'autres mesures brutes de navigation que les pseudo-distances, telles que par exemple les pseudo-vitesses ou encore les pseudo « delta ranges ».

Le contrôle de cohérence peut comporter, pour la pseudo-distance *̅P̅d̅*̅ -̅ *̅a̅*̅ mesurée pour le transmetteur T₃ non autorisée directement, une mesure de l'écart entre ladite pseudo-distance *̅P̅d̅*̅ -̅ *̅a̅*̅ et une pseudo-distance entre le récepteur et le transmetteur T₃ estimée à l'aide des pseudo-distances Pd-a autorisées directement qui sont mesurées pour les transmetteurs T₁ et T₂ dont l'élévation est supérieure à l'élévation minimale.

A cet effet, on peut notamment évaluer la position du récepteur en utilisant l'ensemble des pseudo-distances Pd-a mesurées pour les transmetteurs T1 et T2 à élévation supérieure à l'élévation minimale et autorisées directement, et estimer ladite pseudo-distance entre le récepteur et le transmetteur T₃ à partir de ladite position évaluée du récepteur et de données d'éphéméride concernant ledit transmetteur.

On aura compris que l'invention propose un procédé et un système permettant de limiter l'impact des multitrajets indirects en détectant leur présence avant leur utilisation dans l'algorithme de calcul de la position par l'algorithme de navigation. Il en découle une diminution de l'impact des multitrajets indirects sur la position calculée par le récepteur GNSS, et une amélioration de l'intégrité de cette position calculée.

## Revendications

1. Procédé de contrôle d'un système de navigation de porteur (P) recevant des signaux en provenance d'une pluralité de transmetteurs (T₁-T₃) et étant apte à mesurer pour chaque transmetteur un ensemble de mesures brutes de navigation incluant une pseudo-distance au transmetteur, dans lequel on contrôle l'élévation de chacun des transmetteurs (T₁-T₃) par rapport à l'horizontale (H) du porteur (P) et on élabore une solution de navigation à partir des pseudo-distances (Pd-a) pour lesquelles l'élévation du transmetteur correspondant est supérieure à une élévation minimale (Em), **caractérisé en ce que** :
- on réalise une discrimination des multitrajets parmi les pseudo-distances (*̅P̅d̅*̅ -̅ *̅a̅*̅) mesurées pour les transmetteurs (T₃) dont l'élévation est inférieure à l'élévation minimale (Em), ladite discrimination consistant, pour chacun des transmetteurs (T₃) dont l'élévation est inférieure à l'élévation minimale (Em), en un contrôle de la cohérence d'une mesure brute de navigation mesurée pour ledit transmetteur (T₃) avec une solution de navigation élaborée uniquement avec les mesures brutes de navigations correspondantes mesurées pour les transmetteurs (T₁-T₂) dont l'élévation est supérieure à l'élévation minimale (Em),
- et on retient en outre dans l'élaboration de la solution de navigation les pseudo-distances (Pd-ad) autorisées après ladite discrimination.

2. Procédé selon la revendication 1, dans lequel la discrimination des multitrajets consiste en un contrôle de la cohérence de chacune des pseudo-distances (*̅P̅d̅*̅ -̅ *̅a̅*̅) mesurées pour les transmetteurs (T₃) dont l'élévation est inférieure à l'élévation minimale (Em) avec une solution de navigation élaborée uniquement avec les pseudo-distances (Pd-a) mesurées pour les transmetteurs (T₁-T₂) dont l'élévation est supérieure à l'élévation minimale (Em).

3. Procédé selon la revendication 2, dans lequel le contrôle de cohérence comporte, pour une pseudo-distance (*̅P̅d̅*̅ -̅ *̅a̅*̅) mesurée pour un transmetteur (T₃) dont l'élévation est inférieure à l'élévation minimale, une mesure de l'écart entre ladite pseudo-distance (*̅P̅d̅*̅ -̅ *̅a̅*̅) et une pseudo-distance avec ledit transmetteur (T₃) estimée à l'aide des pseudo-distances (Pd-a) mesurées pour les transmetteurs (T₁-T₂) dont l'élévation est supérieure à l'élévation minimale.

4. Procédé selon la revendication 2, dans lequel le contrôle de cohérence comporte, pour une pseudo-distance (*̅P̅d̅*̅ -̅ *̅a̅*̅) mesurée pour un transmetteur (T₃) dont l'élévation est inférieure à l'élévation minimale, une mesure de l'écart entre ladite pseudo distance (*̅P̅d̅*̅ -̅ *̅a̅*̅) et une pseudo distance audit transmetteur (T₃) calculée à partir des informations de position et d'écart-type de position associées au porteur, lesdites informations étant élaborées à partir des pseudo-distances (Pd-a) mesurées pour les transmetteurs (T₁-T₂) dont l'élévation est supérieure à l'élévation minimale (Em).

5. Procédé selon l'une des revendications 1 à 3, dans lequel l'élévation minimale est modifiée en fonction d'une phase de navigation du porteur.

6. Système de navigation destinée à être intégré dans un porteur (P), comprenant des moyens de réception de signaux en provenance d'une pluralité de transmetteurs (T₁-T₃), et étant apte à mesurer pour chaque transmetteur un ensemble de mesures brutes de navigation incluant une pseudo-distance au transmetteur, le système comportant des moyens de contrôle de l'élévation (10) de chacun des transmetteurs (T₁-T₃) par rapport à l'horizontale (H) du porteur (P), et des moyens (70) pour élaborer une solution de navigation à partir des pseudo-distances (Pd-a) pour lesquelles l'élévation du transmetteur correspondant (T₁-T₂) est supérieure à une élévation minimale (Em),
le système étant **caractérisé en ce qu'**il comporte en outre des moyens de discrimination (80) des multltrajets parmi les pseudo-distances (*̅P̅d̅*̅ -̅ *̅a̅*̅) mesurées pour les transmetteurs (T₃) dont l'élévation est inférieure à l'élévation minimale (Em), lesdits moyens de discrimination étant configurés pour réaliser, pour chacun des transmetteurs (T₃) dont l'élévation est inférieure à l'élévation minimale (Em), un contrôle de la cohérence d'une mesure brute de navigation mesurée pour ledit transmetteur (T₃) avec une solution de navigation élaborée uniquement avec les mesures brutes de navigations correspondantes mesurées pour les transmetteurs (T₁-T₂) dont l'élévation est supérieure à l'élévation minimale (Em),
et **en ce que** les moyens (70) pour élaborer une solution de navigation utilisent en outre les pseudo-distances (Pd-ad) autorisées après ladite discrimination.

## Patentansprüche

1. Verfahren zum Steuern eines Trägernavigationssystems (P), das Signale ausgehend von einer Mehrzahl von Sendern (T₁ - T₃) empfängt und in der Lage ist, für jeden Sender eine Reihe von Navigationsrohmessungen durchzuführen, die eine Pseudoentfernung vom Sender einschießen, wobei das Höhenmaß von jedem der Sender (T₁ - T₃) bezüglich der Horizontalen (H) des Trägers (P) gesteuert wird und eine Navigationslösung ausgehend von den Pseüdoentfernungen (Pd - a) erarbeitet wird, bei denen das Höhenmaß des entsprechenden Senders höher als ein Mindesthöhenmaß (Em) ist, **dadurch gekennzeichnet, dass**:
- eine Unterscheidung der Mehrfachwege unter den Pseudoentfernungen (*̅P̅d̅*̅ -̅ *̅a̅*̅) durchgeführt wird, die für die Sender (T₃) gemessen wurden, deren Höhenmaß geringer als das Mindesthöhenmaß (Em) ist, wobei die Unterscheidung für jeden der Sender (T₃), dessen Höhenmaß geringer als das Mindesthöhenmaß (Em) ist, aus einer Prüfung der Kohärenz einer Navigationsrohmessung, die für den Sender (T₃) durchgeführt wurde, mit einer Navigationslösung besteht, die nur mit den entsprechenden Navigationsrohmessungen erarbeitet wird, die für die Sender (T₁ - T₂) gemessen wurden, deren Höhenmaß größer als das Mindesthöhenmaß (Em) ist,
- und bei der Erarbeitung der Navigationslösung ferner die Pseudoentfernungen (Pd-ad) berücksichtigt werden, die nach der Unterscheidung zugelassen sind.

2. Verfahren nach Anspruch 1, wobei die Unterscheidung der Mehrfachwege aus einer Prüfung der Kohärenz einer jeden der Pseudoentfernungen (*̅P̅d̅*̅ -̅ *̅a̅*̅), die für die Sender (T₃) gemessen wurden, deren Höhenmaß geringer als das Mindesthöhenmaß (Em) ist, mit einer Navigationslösung besteht, die nur mit den Pseudoentfernungen (Pd-a) erarbeitet wird, die für die Sender (T₁ - T₂) gemessen wurden, deren Höhenmaß größer als das Mindesthöhenmaß (Em) ist.

3. Verfahren nach Anspruch 2, wobei die Prüfung der Kohärenz bei einer Pseudoentfernung (*̅P̅d̅*̅ -̅ *̅a̅*̅), die für einen Sender (T₃) gemessen wurde, dessen Höhenmaß geringer als das Mindesthöhenmaß ist, eine Messung der Abweichung zwischen der Pseudoentfernung (*̅P̅d̅*̅ -̅ *̅a̅*̅) und einer Pseudoentfernung mit dem Sender (T₃) umfasst, die mit Hilfe der Pseudoentfernungen (Pda) geschätzt wird, die für die Sender (T₁ - T₂) gemessen wurden, deren Höhenmaß größer als das Mindesthöhenmaß (Em) ist.

4. Verfahren nach Anspruch 2, wobei die Prüfung der Kohärenz bei einer Pseudoentfernung (*̅P̅d̅*̅ -̅ *̅a̅*̅), die für einen Sender (T₃) gemessen wird, dessen Höhenmaß geringer als das Mindesthöhenmaß ist, eine Messung der Abweichung zwischen der Pseudoentfernung (*̅P̅d̅*̅ -̅ *̅a̅*̅) und einer Pseudoentfernung vom Sender (T₃) umfasst, die ausgehend von den dem Träger zugeordneten Angaben über Position und Positionsstandardabweichung berechnet wurde, wobei die Angaben ausgehend von Pseudoentfernungen (Pd-a) erarbeitet werden, die für die Sender (T₁ - T₂) gemessen wurden, deren Höhenmaß größer als das Mindesthöhenmaß (Em) ist.

5. Verfahren nach einem der Ansprüche 1 bis 3, wobei das Mindesthöhenmaß in Abhängigkeit von einer Navigationsphase des Trägers abgeändert wird.

6. Navigationssystem, das dazu bestimmt ist, in einen Träger (P) integriert zu werden und Mittel zum Empfangen von Signalen ausgehend von einer Mehrzahl von Sendern (T₁ - T₃) enthält und in der Lage ist, für jeden Sender eine Reihe von Navigationsrohmessungen durchzuführen, die eine Pseudoentfernung vom Sender einschließen, wobei das System Mittel zum Steuern des Höhenmaßes (10) von jedem der Sender (T₁ - T₃) bezüglich der Horizontalen (H) des Trägers (P) und Mittel (70) zum Erarbeiten einer Navigationslösung ausgehend von den Pseudoentfernungen (Pd - a) enthält, bei denen das Höhenmaß des entsprechenden Senders (T₁ - T₂) größer als ein Mindesthöhenmaß (Em) ist,
wobei das System **dadurch gekennzeichnet ist, dass** es ferner Mittel (80) zur Unterscheidung der Mehrfachwege unter den Pseudoentfernungen (*̅P̅d̅*̅ -̅ *̅a̅*̅) enthält, die für die Sender (T₃) gemessen werden, deren Höhenmaß geringer als das Mindesthöhenmaß (Em) ist, wobei die Unterscheidungsmittel dazu ausgelegt sind, für jeden der Sender (T₃), dessen Höhenmaß geringer als das Mindesthöhenmaß (Em) ist, eine Prüfung der Kohärenz einer Navigationsrohmessung, die für den Sender (T₃) durchgeführt wird, mit einer Navigationslösung durchzuführen, die nur mit den entsprechenden Navigationsrohmessungen erarbeitet wird, die für die Sender (T₁ - T₂) gemessen wurden, deren Höhenmaß größer als das Mindesthöhenmaß (Em) ist,
und dass die Mittel (70) zur Erarbeitung einer Navigationslösung ferner die Pseudoentfernungen (Pd-ad) verwenden, die nach der Unterscheidung zugelassen sind.

## Claims

1. A method for controlling the navigation system of a carrier (P) receiving signals from a plurality of transmitters (T₁-T₃) and capable of measuring for each transmitter a set of raw navigation measurements including a pseudo-distance to the transmitter, wherein the elevation of each of the transmitters (T₁-T₃) is checked relatively to the horizontal (H) of the carrier (P) and a navigation solution is elaborated from pseudo-distances (Pd-a) for which the elevation of the corresponding transmitter is higher than a minimum elevation (Em), **characterized in that** :
- a discrimination of the multiple paths is carried out among the pseudo-distances (*̅P̅d̅*̅ -̅ *̅a̅*̅) measured for the transmitters (T₃) for which the elevation is lower than the minimum elevation (Em), said discrimination consisting, for each of the transmitters (T₃) for which the elevation is lower than the minimum elevation (Em), of a consistency check of a raw navigation measurement measured for said transmitter (T₃) with a navigation solution exclusively elaborated with the corresponding raw navigation measurements measured for the transmitters (T₁-T₂) for which the elevation is higher than the minimum elevation (Em),
- and in the elaboration of the navigation solution, the pseudo-distances (Pd-ad) authorized after said discrimination are further retained.

2. The method according to claim 1, wherein the discrimination of the multiple paths consists in a consistency check of each of the pseudo-distances (*̅P̅d̅*̅ -̅ *̅a̅*̅) measured for the transmitters (T₃) for which the elevation is lower than the minimum elevation (Em) with a navigation solution exclusively elaborated with the pseudo-distances (Pd-a) measured for the transmitters (T₁-T₂) for which the elevation is higher than the minimum elevation (Em).

3. The method according to claim 2, wherein the consistency check includes, for a pseudo-distance (*̅P̅d̅*̅ -̅ *̅a̅*̅) measured for a transmitter (T₃) for which the elevation is lower than the minimum elevation, a measurement of the deviation between said pseudo-distance (*̅P̅d̅*̅ -̅ *̅a̅*̅) and a pseudo-distance with said transmitter (T₃) estimated by means of the pseudo-distances (Pd-a) measured for the transmitters (T₁-T₂) for which the elevation is higher than the minimum elevation.

4. The method according to claim 2, wherein the consistency check includes, for a pseudo-distance (*̅P̅d̅*̅ -̅ *̅a̅*̅) measured for a transmitter (T₃) for which the elevation is lower than the minimum elevation, a measurement of the deviation between said pseudo-distance (*̅P̅d̅*̅ -̅ *̅a̅*̅) and a pseudo-distance to said transmitter (T₃) calculated from position and position standard deviation information associated with the carrier, said information being elaborated from pseudo-distances (Pd-a) measured for the transmitters (T₁-T₂) for which the elevation is higher than the minimum elevation (Em).

5. The method according to any of claims 1 to 3, wherein the minimum elevation is modified depending on a navigation phase of the carrier.

6. A navigation system intended to be integrated into a carrier (P), comprising means for receiving signals from a plurality of transmitters (T₁-T₃), and capable of measuring for each transmitter a set of raw navigation measurements including a pseudo-distance to the transmitter, the system comprising means for controlling the elevation (10) of each of the transmitters (T₁-T₃) relatively to the horizontal (H) of the carrier (P), and means (70) for elaborating a navigation solution from pseudo-distances (Pd-a) for which the elevation of the corresponding transmitter (T₁-T₂) is higher than a minimum elevation (Em),
the system being **characterized in that** it further includes means (80) for discriminating multiple paths among the pseudo-distances (*̅P̅d̅*̅ -̅ *̅a̅*̅) measured for the transmitters (T₃) for which the elevation is lower than the minimum elevation (Em), said discrimination means being configured so as to accomplish for each of the transmitters (T₃) for which the elevation is lower than the minimum elevation (Em), a consistency check of a raw navigation measurement measured for said transmitter (T₃) with a navigation solution exclusively elaborated with the corresponding raw navigation measurements measured for the transmitters (T₁-T₂) for which the elevation is higher than the minimum elevation (Em),
and **in that** the means (70) for elaborating a navigation solution further use the authorized pseudo-distances (Pd-ad) after said discrimination.
